# NEW EUROPEAN PATENT SPECIFICATION

(11) **EP 2 358 833 B2**
(45) Date of publication and mention of the opposition decision: **17.08.2022**
(45) Mention of the grant of the patent: 16.05.2018
(21) Application number: 09852121.4
(22) Date of filing: 24.11.2009
(51) Int. Cl.: C09J 11/00, C09J 133/08, C09J 153/02, C09J 4/06, C09J 4/00, C08F 287/00, C09J 133/04, C09J 7/26, C09J 7/38

(54) **A PRESSURE SENSITIVE ADHESIVE AND A PRESSURE SENSITIVE ADHESIVE TAPE**
DRUCKEMPFINDLICHES KLEBEMITTEL UND DRUCKEMPFINDLICHES KLEBEBAND
ADHÉSIF SENSIBLE À LA PRESSION ET RUBAN ADHÉSIF SENSIBLE À LA PRESSION

(30) Priority: 28.11.2008 JP 2008305617
(43) Date of publication of application: 24.08.2011
(73) Proprietor: 3M Innovative Properties Company, St. Paul, MN 55133-3427 (US)
(72) Inventor: SAKURAI, Aizoh, Tokyo 158-8583 (JP); MINO, Yasuhiro, Tokyo 158-8583 (JP); NAGATA, Hiroyasu, Tokyo 158-8583 (JP); SUGAWA, Kosuke, Tokyo 158-8583 (JP)
(74) Representative: Isarpatent
(86) International application number: PCT/US2009/065600
(87) International publication number: WO 2011/071477

(56) References cited:
- EP-A1- 0 349 216
- EP-A1- 0 352 901
- EP-A1- 2 226 191
- WO-A1-97/31076
- WO-A2-01/57152
- JP-A- 5 078 639
- JP-A- 2001 508 367
- KR-A- 20050 067 158
- US-A- 4 243 500
- US-A- 5 095 065
- Donatas Satas: "Handbook of Pressure Sensitive Adhesive Technology, Third Edition", 1999, Satas & Associates

## Description

### Background

The present disclosure relates to pressure sensitive adhesives. Specifically, the present disclosure relates to a pressure sensitive adhesive obtained by polymerization of an acrylic monomer, a block copolymer, a hydrogenated tackifier and a photopolymerization initiator. Moreover, the present disclosure relates to an adhesive tape comprising an adhesive layer comprising such a pressure sensitive adhesive.

Low surface energy (LSE) substrates are frequently used for products used under a variety of conditions such as automotive parts, building materials, electronic parts, and OA equipment. When those materials are bonded using adhesives, the adhesives may do not provide the desired level of adhesion. As a result, a primer tends to be coated on the material surface as a pretreatment agent.

However, the primer generally contains volatile organic solvent, so there are issues such as worsening of coating work conditions by solvent volatilization when or after the primer is coated, or worsening environment of the place where primer coated materials are used (e.g. inside a vehicle or in a confined space such as a room). There are further issues such as taking a certain work time for coating the primer, coating unevenness, forgetting to coat depending on a worker, and worsening of the coating surface appearance by contamination of primer.

Japanese Patent JP 2003-522249 relates to a pressure sensitive adhesive comprising a polymer blend containing a block copolymer, a tape comprising the pressure sensitive adhesive and an adhesive backing article comprising the pressure sensitive adhesive.

US Patent No. 4,243,500 relates to a pressure sensitive adhesive formed from a composition comprising monofunctional unsaturated acrylate ester monomer, tackifying resin polymer dissolved in the acrylate ester, non-crystallizing elastomeric material dissolved in the acrylate ester, and a UV initiator (5.80 parts with respect to 100 parts of monomers).
EP 2 226 191 A1 is a prior art document under Art. 54(3) EPC that in Preparation Example 3 relates to "a monomer mixture containing 90 parts by weight of 2-ethylhexyl acrylate and 10 parts by weight of acrylic acid was combined with 22.5 parts by weight of a styrene-ethylene/butylene block copolymer (SEBS) (trade name "KRATON G1650" supplied by Kraton Polymers Japan Ltd.), followed by stirring at 60°C for 6 hours to completely dissolve SEBS. After cooling to room temperature (25°C), the resulting viscous monomer mixture was further combined with 0.3 part by weight of a photoinitiator (trade name "IRGACURE 651 " supplied by Ciba Specialty Chemicals Corporation), 22.5 parts by weight of a hydrogenated petroleum resin (trade name "ARKON P115" supplied by Arakawa Chemical Industries, Ltd.) as a tackifier resin, and 0.1 part by weight of 1 ,6-hexanediol diacrylate as a crosslinking agent, followed by stirring to give, as a homogeneous mixture, a polymerizable composition containing an elastomer (hereinafter also referred to as a "polymerizable composition (C) containing the elastomer")". Said Preparation Example 3 has been disclaimed by introducing the following disclaimer into claim 1, which pressure sensitive adhesive is other than an adhesive according to Preparation Example 3 of EP 2 226 191 A1.

### Summary

It would be desirable to have a pressure sensitive adhesive and an adhesive tape having sufficient adhesion to a LSE substrate surface under a wide range of conditions such as ambient temperature, high temperature and after aging with high temperature.

The present disclosure provides a pressure sensitive adhesive having a sufficient adhesion under a range of temperatures including a high temperature to the low surface energy materials such as polyolefins, and an adhesive tape comprising the pressure sensitive adhesive.

The present disclosure provides a pressure sensitive adhesive obtained by polymerizing a mixture containing:
1) 100 mass parts of (meth)acrylic monomer comprising
   98-50 mass parts of a first monomer selected from an aliphatic (meth)alkyl acrylate having a carbon number of 4-6 and an aliphatic (meth)alkyl acrylate having a carbon number of 7-12, wherein the glass transition temperature of a homo-polymer thereof is -25 degrees C or less; and
   2-50 mass parts of a second monomer comprising one or more selected from the group consisting of:
      an amide group-containing ethylenic unsaturated copolymerizing monomer,
      a carboxylic group-containing ethylenic unsaturated copolymerizing monomer,
      an amino group-containing ethylenic unsaturated copolymerizing monomer,
      a non-tertial alkyl(meth)acrylate wherein the glass transition temperature of a homo-polymer thereof is -25 degrees C or more, and
      a monomer represented by the chemical structural formula (I) CH₂=CR¹COO(R₂O)nR³ or CH₂=CR¹COOR⁴R⁵ (R¹=methyl or H; R² and R⁴ = linear or branched alkyl having a carbon number of 1-6; R³ =methyl, ethyl, or substituted or non-substituted phenyl; R⁵=substituted or non-substituted 4-membered or 5-membered ring containing oxygen; n=1-16);
2) 10-100 mass parts of a block copolymer;
3) 20-100 mass parts of hydrogenated tackifier; and
4) 0.05-1.0 mass parts of a photopolymerization initiator, which pressure sensitive adhesive is other than an adhesive according to Preparation Example 3 of EP 2 226 191 A1.

The present disclosure also provides an adhesive sheet which comprises a substrate layer and an adhesive layer comprising the pressure sensitive adhesive.

### Detailed Description

The present disclosure provides a pressure sensitive adhesive and an adhesive tape having sufficient adhesion to LSE substrates (such as polyolefins) under a wide range of conditions such as ambient temperature, high temperature, and after aging at high temperature.

A pressure sensitive adhesive of the present disclosure is a composition obtained by polymerization of a mixture containing
i) 100 mass parts of (meth)acrylic monomer comprising 98 to 50 mass parts of a first monomer and 2 to 50 mass parts of a second monomer,
ii) 10 to 100 mass parts of block copolymer,
iii) 0 to 100 mass parts of hydrogenated tackifier, and
iv) 0.05 to 1.0 mass parts of a photopolymerization initiator.

As used herein the term "(meth)acryl" refers to "acryl or methacryl."

A first monomer can be selected from an aliphatic (meth)alkyl acrylate having a carbon number of 4-6 and an aliphatic (meth)alkyl acrylate having a carbon number of 7-12 and the first monomer includes about 98 to about 50 mass parts of the monomers having -25 degrees C or less of the glass transition temperature of a homo-polymer thereof.

The aliphatic (meth)alkyl acrylate having a carbon number of 4-6 represents an ester of acrylic acid or methacrylic acid and aliphatic alcohol having a carbon number of 4-6. The aliphatic (meth)alkyl acrylate having a carbon number of 7-12 refers to an ester of acrylic acid or methacrylic acid and aliphatic alcohol having a carbon number of 7-12.

In the present disclosure, the first monomer may be a homo-polymer having a glass transition temperature of -25 degrees C. The first monomer may include, but is not limited to, aliphatic (meth)alkyl acrylates having a carbon number of 4-6 such as n-butyl acrylate (BA), iso-butyl acrylate, pentyl acrylate, or hexyl acrylate; aliphatic (meth)alkyl acrylates having a carbon number of 7-12 such as 2-ethylhexyl acrylate (2EHA), iso-octyl acrylate (IOA), n-nonyl(meth)acrylate, iso-nonyl acrylate, decyl(meth)arylate, isodecyl(meth)acrylate, lauryl(meth)acrylate, or iso-dodecyl(meth)acrylate.

The second monomer may include 2 to 50 mass parts of at least one from the group consisting of an amide group-containing ethylenic unsaturated copolymerizing monomer, a carboxylic group-containing ethylenic unsaturated copolymerizing monomer, an amino group-containing ethylenic unsaturated copolymerizing monomer, non-tertial alkyl(meth)acrylate wherein the glass transition temperature of a homo-polymer thereof is -25 degrees C or more, and a monomer represented by the chemical structural formula (I) CH₂=CR¹COO(R₂O)nR³ or CH₂=CR¹COOR⁴R⁵ (R¹=methyl or H; R² and R⁴ = linear or branched alkyl having a carbon number of 1-6; R³ =methyl, ethyl, or substituted or non-substituted phenyl; R⁵=substituted or non-substituted 4-membered or 5-membered ring containing oxygen; n=1-16).

As used herein the amide group-containing ethylenic unsaturated copolymerizing monomer refers to a monomer including -NC(O)- in the side chain of ethylenic unsaturated copolymerizing monomer. The ethylenic unsaturated copolymerizing monomer includes, for example, acrylamide, methacrylamide, N,N-dimethyl acrylamide (DMAA), N,N-diethyl acrylamide (nnDEA), N,N-dimethyl methacrylamide, acroyl morpholine (AcMO), N-vinyl caprolactam, or N-vinyl pyrrolidone (NVP).

As used herein, the carboxylic group-containing ethylenic unsaturated monomer represents a monomer having a carboxylic group in a side chain of the ethylenic unsaturated copolymerizing monomer. The carboxylic group-containing ethylenic unsaturated monomer having a carboxylic group includes, for example, unsaturated monocarboxylic acids such as acrylic acid, methacrylic acid or crotonic acid; or unsaturated dicarboxylic acids such as itaconic acid, fumaric acid, citraconic acid or maleic acid.

As used herein, the amino group-containing ethylenic unsaturated copolymerizing monomer refers to a monomer having an amino group in a side chain of the ethylenic unsaturated copolymerizing monomer. The amino group-containing ethylenic unsaturated copolymerizing monomer includes, for example, dialkylamino alkyl (meth)acrylates such as N,N-dimethylaminoethyl acrylate (DMAEA) or N,N-dimethylamino ethyl methacrylate (DMAEMA); dialkylamino alkyl (meth)acrylamides such as N,N-dimethylamino propyl acrylamide (DMAPAA) or N,N-dimethylamino propyl methacrylamide; dialkylamino alkyl vinyl ethers such as N,N-dimethylamino ethyl vinyl ether or N,N-diethylamino ethyl vinyl ether; or vinyl heterocyclic amines such as 1-vinylimidazole, 4-vinylpyridine or 2-vinylpyridine; or a mixture thereof.

As used herein, the non-tertial alkyl(meth)acrylate having the glass transition temperature of a homo-polymer thereof refers to -25 degrees C or more refers to an ester of acrylic acid or methacrylic acid and non-tertial, that is primary or secondary alcohol, which has the Tg of a homo-polymer thereof is -25 degrees C or more. The non-tertial alkyl(meth)acrylate having the glass transition temperature of a homo-polymer thereof refers to -25 degrees C or more includes, for example, benzyl acrylate (BzA), benzyl methacrylate, isobornyl acrylate (IBA), isobornyl methacrylate, cyclohexyl acrylate, cyclohexyl methacrylate, di-cyclo pentanyl methacrylate, or di-cyclo pentenyl methacrylate.

In a monomer represented by the chemical structural formula (I) CH₂=CR¹COO(R₂O)nR³ or CH₂=CR¹COOR⁴R⁵ (R¹=methyl or H; R² and R⁴ = linear or branched alkyl having a carbon number of 1-6; R³ =methyl, ethyl, or substituted or non-substituted phenyl; R⁵=substituted or non-substituted 4-membered or 5-membered ring containing oxygen; n=1-16), "substituted or non-substituted phenyl" refers to a phenyl group which may be substituted with any number of substitutions. The substitutions include, for example, halogen, alkyl group having a carbon number of 1 to 12, alkoxyl group, or hydroxyl group. The "substituted or non-substituted 5-membered or 6-membered ring containing oxygen" refers to 5-membered or 6-membered ring containing one or more oxygen atoms. The substitutions include the same as for the substituted or non-substituted phenyl. The monomer represented by the above chemical structural formula includes, for example, methoxy triethylene glycol methacrylate, methoxy dipropylene glycol acrylate, ethoxy dipropylene glycol acrylate, 3-methoxy butyl acrylate, 2-ethoxyethoxyethy acrylate, phenoxy ethyl acrylate(PEA), phenoxy ethyl methacrylate, or tetrahydro furyl methacrylate.

The glass transition temperature (Tg) was determined as peak top temperature of loss tangent curve at the glass transition region of the viscoelastic (meth)acrylic homo- and co-polymers, which was measured by dynamic mechanical analysis (Advanced Rheometric Expansion System (ARES) manufactured by Rheometric Scientific, Inc.). The measurement conditions were as follows: shear mode, applied frequency of 1 rad/sec, temperature ramp rate of 5 degrees C/min.

The first and second monomers can be added respectively 98 to 50 mass parts and 2 to 50 mass parts to be totally 100 mass parts. Alternatively, the first monomer can be 98 to 60 mass parts and the second monomer can be 2 to 40 mass parts. The amount of the first and second monomers can be selected properly depending on the combination of the first and second monomers, and the optimal range of each monomer content is variable depending on the combination.

The combination of the first and second monomers can be selected properly and are not limited.

In case, for example, the aliphatic (meth)alkyl acrylate having a carbon number of 4-6 as the first monomer and a single monomer as the second monomer are used, the second monomer can be preferably selected from an amide group-containing ethylenic unsaturated copolymerizing monomer, a carboxylic group-containing ethylenic unsaturated copolymerizing monomer, and non-tertial alkyl(meth)acrylate wherein the glass transition temperature of a homo-polymer thereof is -25 degrees C or more. Specific combination of the first and the second monomers includes, for example, n-butyl acrylate (BA) and one from N,N-dimethyl acrylamide (DMAA), acrylic acid(AA) and benzyl acrylate (BzA). Alternatively, in case an aliphatic (meth)alkyl acrylate having a carbon number of 7-12 as the first monomer and a single second monomer are used, an amide group-containing ethylenic unsaturated copolymerizing monomer can be used. Specifically, 2-ethylhexyl acrylate (2EHA) as the first monomer and N,N-dimethyl acrylamide as the second monomer can be used, respectively.

In case two or more of the second monomers are used, the second monomer includes an amide group-containing ethylenic unsaturated copolymerizing monomer and a carboxylic group-containing ethylenic unsaturated copolymerizing monomer, alternatively includes a carboxylic group-containing ethylenic unsaturated copolymerizing monomer and non-tertial alkyl(meth)acrylate, wherein the glass transition temperature of a homo-polymer thereof is -25 degrees C or more. In this instance, any monomers listed as the first monomers may be used. The specific combination in this instance includes, for example, the first monomer such as n-butyl acrylate or 2-ethylhexyl acrylate; and the second monomer such as a combination of N,N-dimethyl acrylamide and acrylic acid or a combination of acrylic acid and benzyl acrylate. In one aspect, the specific combination may include n-butyl acrylate as the first monomer. Further, the amino group-containing ethylenic unsaturated copolymerizing monomer, such as N,N-dimethyl aminoethyl acrylate or other monomers, can also be contained.

In each combination, it is preferred to contain about 15 mass parts to about 50 mass parts of the amide group-containing ethylenic unsaturated copolymerizing monomer as the second monomer when the aliphatic (meth)alkyl acrylates having a carbon number of 7-12 such as 2-ethylexyl acrylate is used as the first monomer. In this case, the aliphatic (meth)alkyl acrylates having a carbon number of 4-6 such as n-butyl acrylate can be combined further. Alternatively, the monomer represented by the formula (I) such as 3-methoxybutyl acrylate or 2-ethoxyethoxyethy acrylate can be combined further. When the first monomer comprises the aliphatic (meth)alkyl acrylates having a carbon number of 7-12 as a single monomer, it is more preferred to contain about 15 mass parts to about 50 mass parts or about 25 mass parts to about 50 mass of the amide group-containing ethylenic unsaturated copolymerizing monomer as the second monomer.

The combination of an amide group-containing ethylenic unsaturated copolymerizing monomer and an amino group-containing ethylenic unsaturated copolymerizing monomer as the second monomer may improve adhesion to an acid surface such as polyvinyl chloride. Such combination of the monomers includes, for example, 2-ethylhexyl acrylate as the first monomer; and (meth)acrylic monomer containing an amide group-containing ethylenic unsaturated copolymerizing monomer such as N,N-dimethyl acrylamide and an amino group-containing ethylenic unsaturated copolymerizing monomer such as N,N-dimethylamino ethylaclyrate as the second monomer.

### Block copolymer

The pressure sensitive adhesive includes a block copolymer of about 10 mass parts to about 100 mass parts. That corresponds to about 10 parts to about 100 parts with respect to 100 parts of the (meth)acrylic monomer. If it is less than about 10 mass parts, a peel force at ambient temperature tends to be not sufficient, and if it is more than 100 mass parts, the block copolymer tends to be difficult to disperse sufficiently in the monomers.

A block copolymer generally includes type A-B block copolymer and type A-B-A block copolymer. A represents a hard segment such as polystyrene block and B represents a soft segment such as polyisoprene, polybutadiene or polyethylene/butylene. It is preferred that these block copolymers disperse in the acrylic monomer uniformly. The styrene block copolymer includes SIS (styrene-isoprene-styrene) block copolymer, SBS (styrene-butadiene-styrene) block copolymer, SB (styrene-butadiene) block copolymer, SBBS (styrene-butadiene/butylene-styrene) block copolymer, SEBS (styrene -ethylene/butylene-styrene) block copolymer, SEPS (styrene-ethylene/ propylene-styrene) block copolymer, and SEP (styrene-ethylene/propylene) block copolymer, having linear or radial structure. Preferred block copolymer includes SBS, SB and SEBS. A random copolymer such as SBR (styrene-butadiene random copolymer) can be used together. The styrene content in SBS or SB block copolymer may be about 25 mass % or more or about 29 mass % or more.

When the block copolymer is SIS, the aliphatic (meth)alkyl acrylate having a carbon number of 4-6 can be preferably used as the first monomer, and n-butylacrylate can be more preferable. Further, the aliphatic (meth)alkyl acrylate having a carbon number of 7-12 can be used as the first monomer combining with the aliphatic (meth)alkyl acrylate having a carbon number of 4-6 and SEBS.

### Hydrogenated tackifier

The pressure sensitive adhesive of the present disclosure includes a hydrogenated tackifier of about 20 mass parts to about 100 mass parts. The hydrogenated tackifier does not inhibit radical polymerization of the (meth)acrylic monomer by UV and improves adhesive force of the pressure sensitive adhesive. When the amount of the tackifier is less than about 20 mass parts, the adhesive force of the pressure sensitive adhesive to the low surface energy substrate decreases and when the amount of the tackifier is more than about 100 mass parts, the pressure sensitive adhesive becomes difficult to dissolve in the monomer solution. The hydrogenated tackifier includes partially or fully hydrogenated resins such as hydrogenated rosin ester (e.g. Foral 85-E from Eastman Chemical Japan Limited), hydrogenated terpene resin, aliphatic hydrogenated petroleum resin (e.g. Arkon M (partially hydrogenated)) or Arkon P (fully hydrogenated) available from Arakawa Chemical Industries, Ltd.), or aromatic modified hydrogenated petroleum resin (e.g. Escorez 5600 available from Exxon Mobile).

### Photopolymerization initiator

The pressure sensitive adhesive of the present disclosure includes a photopolymerization initiator of about 0.05 mass parts to about 1.0 mass parts. Such range of amount is preferred to have a large adhesive force, especially a peel force at high temperature and a peel force after aging at high temperature. Moreover the amount of the photopolymerization initiator may be about 0.05 mass parts to about 0.5 mass parts or about 0.05 mass parts to about 0.3 mass parts.

The photopolymerization initiators may be selected from known initiators. Such initiators include, for example, 1-hydroxy cyclohexyl phenylketon Irgacure(R)184 (available from Ciba Japan), 2,2-dimethoxy-2-phenylacetophenone (Irgacure(R)651 available from Ciba Japan), 2-hydroxy2-methyl1-phenylpropane-1-one(Darocure(R)1173available from Ciba Japan), 2-methyl1-[4-(methylthio)phenyl]-2-morpholinopropanel-one (Irgacure(R)907 available from Ciba Japan), 2-benzyl2-dimethylaminol-(4-morpholinophenyl)-butane-1-one, 2-chlorothioxanthone, 2,4-dimethylthioxanthone, 2,4-diisopropylthioxanthone, isopropylthioxanthone, 2,4,6-trimethylbenzoyl diphosphine oxide, or bis(2,6-dimethoxybenzoyl)-2,4,4-trimethylpentylphosphine oxide. Such photopolymerization initiators can be used alone or in combination.

The adhesive of the present disclosure may further include a crosslinker. Suitable crosslinkers includes, for example, multifunctional acrylates cross-linking agents, isocyanate cross-linking agents, epoxy cross-linking agents, oxazoline cross-linking agents, azirizine cross-linking agents, metal chelate cross-linking agents, melamine resin cross-linking agents or peroxide cross-linking agents.

The amount of the crosslinker is not limited, but may be from about 0.01 mass parts to about 1.0 mass parts with respect to 100 mass parts of the (meth)acrylic monomer.

The pressure sensitive adhesive of the present disclosure may further comprise additives usually used, such as a plasticizer (process oil, silicone oil, polyethylene glycol etc.), a filler, an anti-aging agent, an adhesive promoter (polyolefin chlorides), a UV absorbent, and/or a pigment.

### Manufacturing Process

The pressure sensitive adhesive of the present disclosure may be obtained by UV polymerization of the components such as the first monomer, the second monomer, the block copolymer and the hydrogenated tackifier, and optionally with additives. Alternatively, the first monomer and the second monomer are mixed firstly, then part of the tackifier is added to the mixture and substituted with nitrogen gas, then cured with UV to obtain a pre-polymer having a viscosity of about 1000 cps to about 5000 cps. Subsequently, the photopolymerization initiator, the block copolymer, and the remaining hydrogenated tackifier are added, mixed and cured with UV to obtain the pressure sensitive adhesive.

### Adhesive tape

The adhesive tape of the present disclosure comprises a substrate layer and an adhesive layer comprising the pressure sensitive adhesive described herein. The adhesive tape may be made by laminating the adhesive layer on one side or both side of the substrate. Other functional layers such as a surface protecting layer or a primer layer may be optionally laminated. Further, a liner may be laminated on the surface of the adhesive layer.

The substrate layer includes a sheet comprising a film or a foam material usually used. The sheet comprising the film may have an adhesion. Suitable film materials include, for example, polyethylene film, polypropylene film, polyester film, polycarbonate film, polyvinyl chloride film, poly vinylidene chloride film, poly styrene film or polyamide film. The sheet comprising the foam includes, for example, acrylic foam sheet, polyethylene foam sheet, chloroprene foam sheet or urethane foam sheet. Specifically, for example, acrylic foam tape (GT7108 available from Sumitomo 3M) can be used as the sheet comprising the foam. The thickness of the substrate layer is not limited, but can be selected depending on the use of the adhesive tape. In certain aspects, the thickness of the substrate layer may range from about 30 micrometers to about 4 millimeters.

The adhesive layer may include the pressure sensitive adhesive of the present disclosure. The thickness of the adhesive layer is not limited, but may be selected depending on the materials of the substrate layer or use of the adhesive tape. In certain aspect, the thickness of the adhesive layer may range from about 10 micrometers to about 500 micrometers.

The adhesive tape may be prepared by known methods. For example, the mixture of the first and the second monomers, the block copolymer, the hydrogenated tackifier and the photopolymerizaiton initiator is placed between films, then cured with UV to obtain the adhesive layer. The film is peeled off from one side of the obtained adhesive layer, and the substrate layer is laminated on the film peeled surface to obtain the adhesive tape. If a release-treated film is used, operation of peeling off the film from the adhesive layer and laminating to the substrate layer is easier. When the adhesive layer and the substrate layer are laminated, a primer may be applied on the surface of the adhesive layer. Further, a double -sided adhesive tape may be obtained if the adhesive layer is laminated to both sides of the substrate layer.

The pressure sensitive adhesive of the present disclosure can be used as an adhesive tape by laminating to the substrate layer. The pressure sensitive adhesive of the present disclosure has a sufficient adhesion to LSE substrates (such as polyolefins) surface under a wide range of conditions such as ambient temperature, high temperature, and after aging with high temperature, and the adhesive tape comprising the pressure sensitive adhesive can be used to adhere products used under a variety of conditions such as automotive parts, building material, electronic parts, and OA equipments.

In order that the invention described herein can be more fully understood, the following examples are set forth. It should be understood that these examples are for illustrative purposes only, and are not to be construed as limited the invention in any manner.

### Examples

Description of ingredients used:
892LS : chlorinated polyolefin
Arkon M115 : partially hydrogenated petroleum resin
Arkon P125 : fully hydrogenated petroleum resin
Arkon M135 : partially hydrogenated petroleum resin
Arkon P100 : fully hydrogenated petroleum resin
HDDA : 1,6-hexanediol diacrylate
Irgacure 651: 2,2-dimethoxy-1,2-diphenylethane-1-one
Viscoat #158 : 3-methoxybutyl acrylate
Viscoat #190 : 2-ethoxyethoxyethy acrylate
I-marv P140 : fully hydrogenated petroleum resin
Piccolyte A-135 : a-pinene resin
Regalrez 6108 : hydrogenated hydrocarbon resin
Regalrez 1085 : hydrogenated hydrocarbon resin
CP343-1 : chlorinated polyolefin
ED-502S : mono-functional epoxy resin

### Examples 1, 2, 5-12 and 14-55, Comparative Examples 7-16

The monomers shown in Tables 1-12 and the other components were mixed and dissolved with stirring in a container (65 degrees C for 24 hours). If the components included chlorinated polyolefin (892LS available from Nippon Paper Chemicals Co. LTD.), the monomers and the chlorinated polyolefin were mixed and stirred in the container (65 degrees C for 60 minutes), then the remaining components were added to the chlorinated polyolefin solution and dissolved with stirring.

The obtained mixture was placed between 50 micrometers thickness of the release-treated PET films (from Mitsubishi Chemical), then coated by knife coating. Subsequently, the sample was treated with UV irradiation (wavelength 300 to 400 nm, power 0.5 to 7 mW/cm2) for six minutes and cured, then the pressure sensitive adhesive was obtained. The thickness of the obtained sample was 100 micrometers.

One of the PET films of the obtained pressure sensitive adhesive was peeled off and a primer (Primer K500 available from Sumitomo 3M) was coated with a felt on the exposed adhesive surface. Next, an acrylic foam tape (GT7108 available from Sumitomo 3M) was laminated on the coated surface to obtain the adhesive tape. In Examples 9-12, the acrylic foam tape was laminated on the exposed adhesive surface without the primer to obtain the adhesive tape.

For shear test and static shear test, the obtained adhesive tape was used as a sample. For peel force test, a 50 micrometer thickness of PET film treated with Primer K500 laminated on the surface of the acrylic foam tape side of the obtained adhesive tape was used.

### Comparative example 1

The components shown in Table 2 and toluene were added to a container and stirred for 24 hours at ambient temperature. The stirred solution was coated on 50 micrometer thickness of the release-treated PET film (from Mitsubishi Chemical) by knife coating, dried at 100 degrees C for 10 minutes to obtain a pressure sensitive adhesive. The thickness was 50 micrometers.

One of the PET films of the obtained pressure sensitive adhesive was peeled off, then primer (Primer K500 available from Sumitomo 3M) was coated on the exposed surface with a felt, and an acrylic foam tape (GT7108 available from Sumitomo 3M) was laminated on the surface to obtain a test sample.

### Comparative example 2

Chlorinated polyolefin (892LS available from Nippon Paper Chemicals Co. LTD.) was added to toluene, heated to 60 degrees C and dissolved with stirring. Subsequently, to the obtained toluene solution, the block copolymer and the tackifier shown in Table 2 was added and dissolved with stirring for 24 hours at ambient temperature. 285.7 parts (100 parts in solid) of 35 mass % of acrylic polymer and 6.66 parts (0.2 parts in solid) of 3 mass % toluene solution of azirizine crosslinker (isophthaloylbis-2-methylaziridin) were added to the obtained toluene solution, well-stirred to give an adhesive solution.

The adhesive solution was coated on a separating material by knife coating, dried at 100 degrees C for 20 minutes to obtain an adhesive sheet. The thickness was 70 micrometers. A primer (Primer K500 available from Sumitomo 3M) was coated on the surface of the obtained adhesive sheet with a felt, then acrylic foam tape (GT7108 available from Sumitomo 3M) was laminated on the primer coated surface to obtain a test sample.

### Preparation of acrylic polymer

71.11 parts of 2-ethylhexyl acrylate, 27.65 parts of N,N-dimethyl acrylamide, 1.235 parts of acrylic acid, 157.9 parts of ethyl acetate and 27.8 parts of toluene were poured into a pressure glass bottle. After adding 0.1481 parts of 2,2'-azobis(2,4-dimethylvaleronitrile) as a solvent polymerization initiator to the pressure glass bottle, the system was substituted by nitrogen gas with an inert gas injection tube for 10 minutes. Immediately after the gas substitution, the pressure glass bottle was closed with a lid, then cured in a constant-temperature bath at 50 degrees C for 20 hours to give an acrylic polymer solution.

### Examples 3 and 4, Comparative examples 3-6

A photopolymerization initiator was added to the monomers listed in Tables 1 and 2 with the amount referred in the upper column, then substituted with nitrogen gas (deoxygenation), then cured with UV to obtain a pre-polymer having a viscosity of about 1000 cps to about 5000 cps. Then the photopolymerization initiator, the crosslinker, the block copolymer and the hydrogenated tackifier with the amount referred in the low column were added and dissolved with stirring in the container for 24 hours at 65 degrees C. Subsequently, the sample was obtained in the same manner as Example 1.

### Measurement of peel force at ambient temperature to polyolefin

A panel made of polypropylene (PP) (5 mm x 35 mm x 75 mm, available from Japan Polypropylene Corporation) as an adherend was prepared, and washed with isopropyl alcohol (IPA). The samples (12 mm x 60 mm) prepared in the Examples and Comparative examples were adhered to the adherend with a 2 kg roller (back and forth one time) and aged for 24 hours at ambient temperature (25 degrees C), then 180° peel force (at ambient temperature, 50 mm/minute of tension rate) was measured with a tensile tester (Tensilon RTC-1325A available from Orientec Co., LTD.). The result is shown in Tables 1-12.

### Measurement of peel force at 80 degrees C to polyolefin

A panel made of polypropylene (PP) (5 mm x 35 mm x 75 mm, available from Japan Polypropylene Corporation) as an adherend was prepared, and washed with isopropyl alcohol (IPA). The samples (12 mm x 60 mm) prepared in the Examples and Comparative examples were adhered to the adherend with a 2 kg roller (back and forth one time) and aged for 30 to 60 minutes at 80 degrees C, then 180° peel force (at 80 degrees C, 50 mm/minute of tension rate) was measured with a tensile tester (Tensilon RTC-1325A available from Orientec Co., LTD.). The result is shown in Tables 1-12.

### Measurement of peel force after aging at 80 degrees C to polyolefin

A panel made of polypropylene (PP) (5 mm x 35 mm x 75 mm, available from Japan Polypropylene Corporation) as an adherend was prepared, and washed with isopropyl alcohol (IPA). The samples (12 mm x 60 mm) prepared in the Examples 1-12 and 14-42 and Comparative examples 1-14 were adhered to the adherend with a 2 kg roller (back and forth one time) and stored for two weeks at 80 degrees C, then 180° peel force (at ambient temperature, 50 mm/minute of tension rate) was measured with a tensile tester (Tensilon RTC-1325A available from Orientec Co., LTD.). The result is shown in Tables 1-9.

### Measurement of shear force after aging at 80 degrees C to polyolefin

A panel made of polypropylene (PP) (5 mm x 35 mm x 75 mm, available from Japan Polypropylene Corporation) as an adherend was prepared, and washed with isopropyl alcohol (IPA). The samples (12 mm x 60 mm) prepared in the Examples 1-12 and 14-42 and Comparative examples 1-14 were adhered to the adherend with a 2 kg roller (back and forth one time) and a painted panel (cation electro-painting: JIS,G,3141(SPCC,SD)) which was coated by a primer (Primer K500 available from Sumitomo 3M) with a felt was laminated on the opposite surface (acrylic foam side surface) of the sample, then stored for 24 hours at ambient temperature (25 degrees C) and two weeks at 80 degrees C, shear force (Tensilon RTC-1325A available from Orientec Co., LTD., at ambient temperature, 50 mm/minute of tension rate) was measured with a tensile tester (Tensilon RTC-1325A available from Orientec Co., LTD.). The result is shown in Tables 1-9.

### Static Shear test at 70 degrees C

As adherends, polyvinyl chloride panel (acid surface) (XP103 available from Mitsubishi Chemical, 2mm×25mm×100mm) and polypropylene (PP) panel (LSE surface) (available from Japan Polypropylene Corporation, 5mm×35mm×75mm) were prepared and washed with isopropyl alcohol (IPA). The adhesive surface of the test samples (12mm×25mm) prepared in the Examples 9 to 12 were adherend to the adherend and the opposite side (acrylic foam tape surface) of the test samples were adhered to cleaned SUS-304 panel (0.5mm×30mm×60mm), then pressed with a 5 kg roller (back and forth one time). The samples were placed in the oven for 30 minutes at 70 degrees C, then positioned 2 degrees from the vertical, a 1 kg of weight was hung on the free end of the samples and the time required for the weighted sample to fall off the panel was recorded. The result is shown in Table 3.

### Static Shear test at 40 degrees C

The test samples (12mm×25mm) prepared in the Examples 49 to 52 were used for the test in the same manner as the Static Shear test at 70 degrees C except that the oven temperature was 40 degrees C and the adherends listed in Table 13 were used. The result is shown in Table 13.

"Mode" in the Tables shows a state of the test samples after each test which are visually observed and shown in failure mode. The states of each failure mode used herein are the following.
FB (foam split break) : A state which a substrate layer (acrylic foam tape) had cohesion failure is shown. That is the state which the adhesive layer still adhered to the adherend and the substrate layer (acrylic foam tape) is destroyed.
POP: A state which a sample was peeled off from the adherend by interface failure of the adhesive layer is shown. The substrate layer (acrylic foam tape) still adhered to the adhesive layer and no adhesive remaining was observed visually on the adherend or the adherend surface was not sticky.
ACF (cohesion failure) : A marker of adhesive layer's cohesion failure. A state which an adhesive layer of the sample was destroyed and the adherend and the substrate layer were separated with the destroyed adhesive layer.
Anchor: A state which the sample separated at the interface of the adhesive layer and the substrate layer (acrylic foam tape).
Jerky : The state which the peel force was up and down domestically during peeling and showed the cycle of slip and stick with respect to the time axis. The peel force value in the Tables showed peak value.

"Not dispersed" shows that the block copolymer did not disperse in the monomers (dispersion failure).

**Table 1**

| | Reagent | Supplier | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| 1 st monomer | 2EHA | Nippon Shokubai | 71.11 | 71.11 | 71.11 | 71.11 | 71.11 | 71.11 | 64.6 | 64.5 |
| 2nd monomer | DMAA | KOHJIN Co., Ltd. | 27.65 | 27.65 | 27.65 | 27.65 | 27.65 | 27.65 | | |
| | IBA | Osaka Organic Chemical Industry Ltd. | | | | | | | 32.0 | 32 |
| | AA | Toagosei Co., ltd. | 1.235 | 1.235 | 1.235 | 1.235 | 1.235 | 1.235 | 3.4 | 3.5 |
| Photopolymerization initiator | Irgacure 651 | Ciba Japan | 0.2370 | 0.2370 | 0.03951 | 0.03951 | 0.2370 | 0.2370 | 0.14 | 0.24 |
| | | | | | 0.1975 | 0.1975 | | | | |
| Closslinker | HDDA | Kyoeisha Chemical Co.,Ltd. | 0.09877 | 0.09877 | 0.09877 | 0.09877 | 0.09877 | 0.09877 | 0.11 | 0.1 |
| Block copolymer | D1118K (SBS) | Kraton Polymers | 59.26 | 59.26 | 9.877 | 14.81 | 79.01 | 98.77 | | |
| | P1500 (SBBS) | Asahi Kasei Chemicals Co. | | | | | | | 5.7 | |
| | G1657 (SEBS) | Kraton Polymers | | | | | | | 15.7 | |
| | V9827 (SEBS) | KURARAY CO., LTD. | | | | | | | | 40 |
| Tackifier | Arkon M135 | Arakawa Chemical Industries, Ltd. | 24.69 | 24.69 | 19.75 | 19.75 | 39.51 | 49.38 | | |
| | Arkon M115 | Arakawa Chemical Industries, Ltd. | 24.69 | 24.69 | | | 39.51 | 49.38 | | |
| | Arkon P100 | Arakawa Chemical Industries, Ltd. | | | | | | | | 32 |
| | I-marv P140 | Idemitsu Kosan | | | | | | | 21.4 | |
| Additive | 892LS | Nippon Paper Chemicals CO., LTD. | 4.938 | | | | | | | 5 |
| Peel force on PP at ambient temp. (N/12mm) | | force | 25 | 25 | 18.7 | 22.2 | 22.4 | 21.8 | 24 | 24 |
| | | mode | FB | FB | POP | POP | FB | FB | POP | POP |
| Peel force on PP at 80 degrees C (N/12mm) | | force | 10 | 11 | 9.6 | 9.4 | 11 | 11.1 | 4 | 5 |
| | | mode | POP | POP | POP | POP | POP | POP | POP | POP |
| Peel force after aging at 80 degrees C | | force | 25 | 25 | 20 | 23 | 24 | 24 | 24 | 24 |
| (N/12mm) | | | | | | | | | | |
| | | mode | FB | FB | POP | POP | FB | FB | POP | POP |
| Shear force after aging at 80 degrees C MPa) | | force | 1 | 1 | 0.8 | 0.8 | 0.9 | 0.9 | 0.9 | 0.9 |
| | | mode | FB | FB | POP | POP | FB | FB | POP | POP |

**Table 2**

| | Reagent | Supplier | Cex. 1 | Cex. 2 | Cex. 3 | Cex. 4 | Cex. 5 | Cex. 6 | Cex. 7 |
|---|---|---|---|---|---|---|---|---|---|
| 1st monomer | 2EHA | Nippon Shokubai | | 71.11 | 76 | 69 | 71.11 | 71.11 | 71.11 |
| 2nd monomer | DMAA | KOHJIN Co., Ltd. | | 27.65 | | | 27.65 | 27.65 | 27.65 |
| | IBA | Osaka Organic Chemical Industry Ltd. | | | 19 | 28 | | | |
| | AA | Mitsubishi Chemical Corporation | | 1.235 | 5 | 3 | 1.235 | 1.235 | 1.235 |
| Photopolymerization initiator | Irgacure 651 | Ciba Japan | | | 0.06 | 0.04 | 0.03951 | 0.03951 | 0.237 |
| | | | | | 0.2 | 0.2 | 0.1975 | 0.1975 | |
| Solvent polymerization initiator | 2,2'-azobis(2,4-dimethylvaleronitrile) | Wako Pure Chemical Industries, Ltd. | | 0.1481 | | | | | |
| Closslinker | HDDA | Kyoeisha Chemical Co.,Ltd. | | | 0.08 | 0.08 | 0.09877 | 0.09877 | 0.09877 |
| | isophthaloylbis-2-methylaziridin | - | | 0.1975 | | | | | |
| Block copolymer | D1118K (SBS) | Kraton Polymers | | 59.26 | | | 4.938 | 9.877 | 108.6 |
| | T-411 (SBS) | Asahi Kasei Chemicals Co. | 13.45 | | | | | | |
| | # 1205 (SBR) | Asahi Kasei Chemicals Co. | 7.24 | | | | | | |
| Tackifier | Arkon M135 | Arakawa Chemical Industries, Ltd. | | 24.69 | | | 19.75 | 9.877 | 54.32 |
| | Arkon M115 | Arakawa Chemical Industries, Ltd. | | 24.69 | | | | | |
| | Piccolyte A-135 | Rika Fine-Tech Inc. | 20.69 | | | | | | 54.32 |
| | Regalrez6108 | Eastman Chemical Japan | | | 14 | | | | |
| | Regalrez1085 | Eastman Chemical Japan | | | | 7 | | | |
| Additive | 892LS | Nippon Paper Chemicals CO., LTD. | | 4.938 | | | | | |
| | CP343-1 | Eastman Chemical Japan | | | | 2 | | | |
| Solvent | toluene | Wako Pure Chemical Industries, Ltd. | 58.2 | 206 | | | | | |
| Peel force on PP at ambient temp. (N/12mm) | | force | 18 | 25 | 25 | 18 | 16.5 | 16.5 | not dispersed |
| | | mode | POP | FB | FB | POP | POP | POP | |
| Peel force on PP at 80 degrees C (N/12mm) | | force | 2 | 10 | 9 | 5 | 6 | 3.8 | |
| | | mode | POP | POP | ACF | POP | POP | POP | |
| Peel force after aging at 80 degrees C (N/12mm) | | force | 18 | 20 | 25 | 18 | 17 | 17 | |
| | | mode | POP | POP | FB | POP | POP | POP | |
| Shear force after aging at 80 degrees C (MPa) | | force | 0.2 | 0.5 | 0.8 | 0.3 | 0.5 | 0.5 | |
| | | mode | POP | POP | FB | POP | POP | POP | |

**Table 3**

| | Reagent | Supplier | Ex. 9 | Ex. 10 | Ex. 11 | Ex. 12 |
|---|---|---|---|---|---|---|
| 1st monomer | 2EHA | Nippon Shokubai | 70.12 | 70.12 | 69.14 | 71.111 |
| 2^{nd} monomer | DMAA | KOHJIN Co., Ltd. | 26.67 | 26.67 | 25.68 | 27.65 |
| | DMAEA | KOHJIN Co., Ltd. | 1.975 | | 3.951 | |
| | AA | Mitsubishi Chemical Corporation | 1.235 | 1.235 | 1.235 | 1.235 |
| Photopolymerization initiator | Irgacure 651 | Ciba Japan | 0.1778 | 0.1778 | 0.237 | 0.237 |
| Closslinker | HDDA | Kyoeisha Chemical Co., Ltd. | 0.0988 | 0.0988 | 0.0988 | 0.0988 |
| Block copolymer | D1118K (SBS) | Kraton Polymers | 39.51 | 39.51 | 59.26 | 59.26 |
| Tackifier | Arkon M135 | Arakawa Chemical Industries, Ltd. | 29.63 | 29.63 | 23.7 | 24.69 |
| | Arkon M115 | Arakawa Chemical Industries, Ltd. | 9.877 | 9.877 | 23.7 | 24.69 |
| Additive | 892LS | Nippon Paper Chemicals CO., LTD. | 4.938 | 4.938 | 4.938 | 4.938 |
| | ED-502S | ADEKA | 0.4938 | 0.4938 | | |
| Peel force on PP at ambient temp. (N/12mm) | | force | 25 | 25 | 25 | 25 |
| | | mode | FB | FB | FB | FB |
| Peel force on PP at 80 degrees C (N/12mm) | | force | 11 | 10 | 12 | 12 |
| | | mode | POP | POP | POP | POP |
| Static shear at 70 degrees C on acid surface (minutes) | | force | 86 | 22 | 125 | 38 |
| | | mode | POP | POP | POP | POP |
| Static shear at 70 degrees C on olefin surface (minutes) | | force | >10000 | 512 | >10000 | 38 |
| | | mode | POP | Anchor | POP | Anchor |

**Table 4**

| | Reagent | Supplier | Cex. 8-1 | Ex. 14 | Ex. 15 | Ex. 16 | Ex. 17 | Ex. 18 | Ex. 19 | Ex. 20 | Cex. 8-2 |
|---|---|---|---|---|---|---|---|---|---|---|---|
| 1 st monomer | BA | Mitsubishi Chemical Corporation | 100 | 98 | 96 | 92 | 88 | 82 | 80 | 60 | 40 |
| 2^{nd} monomer Photo polymerization initiator | AA | Toagosei co., Ltd. | 0 | 2 | 4 | 8 | 12 | 18 | 20 | 40 | 60 |
| | Irgacure 651 | Ciba Japan | 0.24 | 0.24 | 0.24 | 0.24 | 0.24 | 0.24 | 0.24 | 0.24 | 0.24 |
| Closslinker | HDDA | Kyoeisha Chemical Co.,Ltd. | 0.1 | 0.1 | 0.1 | 0.1 | 0.1 | 0.1 | 0.1 | 0.1 | 0.1 |
| Block copolymer | D1118K (SBS) | Kraton Polymers | 60 | 60 | 60 | 60 | 60 | 60 | 40 | 40 | 30 |
| Tackifier | Arkon M135 | Arakawa Chemical Industries, Ltd. | 25 | 25 | 25 | 25 | 25 | 25 | 20 | 20 | 15 |
| | Arkon M115 | Arakawa Chemical Industries, Ltd. | 25 | 25 | 25 | 25 | 25 | 25 | 20 | 20 | 15 |
| Additive | 892LS | Nippon Paper Chemicals CO., LTD. | 5 | 5 | 5 | 5 | | | | | |
| Peel force at ambient temp. (N/12mm)/mode | | | 1.9/POP | 16/POP | 22/POP | 29/Jerky | 27/FB | 29/Jerky | 27/POP | 7.5/POP | not dispersed |
| Peel force at 80 degrees C (N/12mm)/mode | | | 1.4/POP | 6/POP | 8/POP | 10/POP | 12/POP | 12.5/POP | 14/POP | 17/POP | |
| Peel force after aging at 80 degrees C (N/12mm)/mode | | | - | - | 26/FB | 26/FB | 22/POP | 20/POP | 8.8/POP | 4.4/POP | |
| Shear force after aging at 80 degrees C (N/25×25mm)/ mode | | | - | - | 450/FB | 454/FB | 793/FB | 474/FB | 661/POP | 620/POP | |

**Table 5**

| | Reagent | Supplier | Ex. 21 | Ex. 22 | Ex. 23 | Ex. 24 | Ex. 25 | Ex. 26 | Cex. 9 | Cex. 10 | Cex. 11 |
|---|---|---|---|---|---|---|---|---|---|---|---|
| 1^{st} monomer | BA | Mitsubishi Chemical Corporation | 90 | 80 | 70 | | | | | | |
| | 2EHA | NIPPON SHOKUBAI | | | | 70 | 60 | 50 | 40 | 30 | 15 |
| 2^{nd} monomer Photo polymerization initiator | DMAA | KOHJIN Co., Ltd. | 10 | 20 | 30 | 30 | 40 | 50 | 60 | 70 | 85 |
| | Irgacure 651 | Ciba Japan | 0.24 | 0.24 | 0.24 | 0.24 | 0.24 | 0.24 | 0.24 | 0.24 | 0.24 |
| Closslinker | HDDA | Kyoeisha Chemical Co.,Ltd. | 0.1 | 0.1 | 0.1 | 0.1 | 0.1 | 0.1 | 0.1 | 0.1 | 0.1 |
| Block copolymer | D1118K (SBS) | Kraton Polymers | 60 | 60 | 60 | 60 | 60 | 60 | 60 | 30 | 30 |
| Tackifier | Arkon M135 | Arakawa Chemical Industries, Ltd. | 25 | 25 | 25 | 25 | 25 | 25 | 25 | 15 | 15 |
| | Arkon M115 | Arakawa Chemical Industries, Ltd. | 25 | 25 | 25 | 25 | 25 | 25 | 25 | 15 | 15 |
| Peel force at ambient temp. (N/12mm)/mode | | | 30/Jerky | 24/FB | 35/Jerky | 23/POP | 31/FB | 24/FB | 24/FB | not dispersed | not dispersed |
| Peel force at 80 degrees C (N/12mm)/mode | | | 6.4/POP | 8.4/POP | 9.8/POP | 8.9/POP | 11.7/POP | 12/POP | 12/POP | | |
| Peel force after aging at 80 degrees C (N/12mm)/ mode | | | 17/POP | 17.5/POP | 23/POP | 30.5/POP | 36/FB | 6.0/POP | 5.6/POP | | |
| Shear force after aging at 80 degrees C (N/ 25×25mm)/mode | | | 463/FB | 594/FB | 661/POP | 534/FB | 530/FB | - | - | | |

**Table 6**

| | Reagent | Supplier | Cex. 12 | Ex. 27 | Ex. 28 | Ex. 29 |
|---|---|---|---|---|---|---|
| 1st monomer | BA | Mitsubishi Chemical Corporation | 100 | 95 | 90 | 65 |
| 2nd monomer | BzA | Osaka Organic Chemical Industry Ltd. | 0 | 5 | 10 | 35 |
| Photopolymerization initiator | Irgacure 651 | Ciba Japan | 0.24 | 0.24 | 0.24 | 0.24 |
| Closslinker | HDDA | Kyoeisha Chemical Co., Ltd. | 0.1 | 0.1 | 0.1 | 0.1 |
| Block copolymer | D1118K (SBS) | Kraton Polymers | 60 | 60 | 60 | 60 |
| Tackifier | Arkon M135 | Arakawa Chemical Industries, Ltd. | 25 | 25 | 25 | 25 |
| | Arkon M115 | Arakawa Chemical Industries, Ltd. | 25 | 25 | 25 | 25 |
| Additive | 892LS | Nippon Paper Chemicals CO., LTD. | 5 | 5 | 5 | 5 |
| Peel force at ambient temp. (N/12mm)/mode | | | 1.9/POP | 18.0/POP | 23.0/POP | 24/FB |
| Peel force at 80 degrees C (N/12mm)/mode | | | 1.4/POP | 5.0/POP | 7.9/POP | 7.2/POP |
| Peel force after aging at 80 degrees C (N/12mm)/mode | | | - | 26/FB | 26/FB | 26/FB |
| Shear force after aging at 80 degrees C (N/25x25mm)/mode | | | - | 447/FB | 516/FB | 617/FB |

**Table 7**

| | Reagent | Supplier | Ex. 30 | Ex. 31 | Ex. 32 | Ex. 33 | Ex. 34 |
|---|---|---|---|---|---|---|---|
| 1st monomer | BA | Mitsubishi Chemical Corporation | 90 | 90 | 90 | 90 | 94 |
| 2nd monomer | DMAA | KOHJIN Co., Ltd. | 10 | | | 8 | 4 |
| | AcMO | KOHJIN Co., Ltd. | | 10 | | | |
| | NVP | Wako Pure Chemical Industries, Ltd. | | | 10 | | |
| | DMAEA | KOHJIN Co., Ltd. | | | | 2 | 2 |
| | AA | Mitsubishi Chemical Corporation | 1.25 | 1.25 | 1.25 | 1.25 | 1.25 |
| Photo polymerization initiator | Irgacure 651 | Ciba Japan | 0.24 | 0.24 | 0.24 | 0.24 | 0.24 |
| Closslinker | HDDA | Kyoeisha Chemical Co., Ltd. | 0.1 | 0.1 | 0.1 | 0.1 | 0.1 |
| Block copolymer | D1118K (SBS) | Kraton Polymers | 60 | 60 | 60 | 60 | 60 |
| Tackifier | Arkon M135 | Arakawa Chemical Industries, Ltd. | 25 | 25 | 25 | 25 | 25 |
| | Arkon M115 | Arakawa Chemical Industries, Ltd. | 25 | 25 | 25 | 25 | 25 |
| Additive | 892LS | Nippon Paper Chemicals CO., LTD. | 5 | 5 | 5 | 5 | |
| Peel force at ambient temp. (N/12mm)/mode | | | 29/FB | 28/FB | 28/FB | 24/FB | 24/FB |
| Peel force at 80 degrees C (N/12mm)/mode | | | 9.2/POP | 10.1/POP | 8.3/POP | 11.0/POP | 7/POP |
| Peel force after aging at 80 degrees C (N/12mm)/ mode | | | 26/FB | 26/FB | 26/FB | 26/FB | 26/FB |
| Shear force after aging at 80 degrees C (N/25x25mm) /mode | | | 728/FB | 426/FB | 466/FB | 831/FB | 821/FB |

**Table 8**

| | Reagent | Supplier | Ex. 35 | Ex. 36 | Ex. 37 | Ex. 38 | Ex. 39 | Ex. 40 | Ex. 41 | Ex. 42 |
|---|---|---|---|---|---|---|---|---|---|---|
| 1st monomer | BA | Mitsubishi Chemical Corporation | 65.5 | 65.5 | 65.5 | 65.5 | 65.5 | 65.5 | 65.5 | 65.5 |
| 2^{nd} monomer | BzA | Osaka Organic Chemical Industry LTD. | 30 | 30 | 30 | 30 | 30 | 30 | 30 | 30 |
| | AA | Mitsubishi Chemical Corporation | 4.5 | 4.5 | 4.5 | 4.5 | 4.5 | 4.5 | 4.5 | 4.5 |
| Photo polymerization initiator | Irgacure 651 | Ciba Japan | 0.24 | 0.24 | 0.24 | 0.24 | 0.24 | 0.24 | 0.24 | 0.24 |
| Closslinker | HDDA | Kyoeisha Chemical Co., Ltd. | 0.1 | 0.1 | 0.1 | 0.1 | 0.1 | 0.1 | 0.1 | 0.1 |
| Block copolymer | D1118K, Sty 31% (SBS) | Kraton Polymers | 60 | | | | | | | |
| | D-KX415, Sty 35% (SB) | Kraton Polymers | | 60 | | | | | | |
| | D1102, Sty 30% (SBS) | Kraton Polymers | | | 60 | | | | | |
| | Asaprene(R) T-438, Sty 35% (SBS) | Asahi Kasei Chemicals Co. | | | | 60 | | | | |
| | Tafprene(R) 126, Sty 40% (SBS) | Asahi Kasei Chemicals Co. | | | | | 60 | 50 | | |
| | Vector(R) 8508, Sty 29% (SBS) | Dexco Polymers LP | | | | | | | 60 | |
| | Vector(R) 4421, Sty 30% (SIS) | Dexco Polymers LP | | | | | | | | 60 |
| | LBR-307 (BR, Mn=8xE3) | KURARAY CO., LTD. | | | | | | 10 | | |
| Tackifier | Arkon M135 | Arakawa Chemical Industries, Ltd. | 25 | 25 | 25 | 25 | 25 | 30 | 25 | 25 |
| | Arkon M115 | Arakawa Chemical Industries, Ltd. | 25 | 25 | 25 | 25 | 25 | 30 | 25 | 25 |
| Additive | 892LS | Nippon Paper Chemicals CO., LTD. | | | | | | 5 | | |
| Peel force at ambient temp. (N/12mm)/mode | | | 24/FB | 23/Jerky | 22.5/Jerky | 22.0/Jerky | 13/Jerky | 27/POP | 22.0/Jerky | 21.0/Jerky |
| Peel force at 80 degrees C (N/12mm)/mode | | | 9.0/POP | 12.2/POP | 12.5/POP | 12.5/POP | 10.2/POP | 9.5/POP | 10.8/POP | 1.1/POP |
| Peel force after aging at 80 degrees C (N/12mm)/mode | | | 18/POP | 14/POP | 25/POP | 14/POP | 14/POP | 33/Jerky | 25/POP | - |
| Shear force after aging at 80 degrees C (N/25x25mm)/mode | | | 746/FB | 661/FB | 627/FB | 785/FB | 472/POP | 470/POP | 576/FB, POP | - |

**Table 9**

| Reagent | Supplier | Ex. 43 | Cex. 13 | Cex. 14 |
|---|---|---|---|---|
| BA | Mitsubishi Chemical Corporation | 65.5 | 65.5 | |
| BzA | Osaka Organic Chemical Industry LTD. | 30 | 30 | 100 |
| AA | Mitsubishi Chemical Corporation | 4.5 | 4.5 | |
| Irgacure 651 | Ciba Japan | 0.24 | 5.8 | 5.8 |
| HDDA | Kyoeisha Chemical Co.,Ltd. | 0.1 | 0.1 | |
| D1118K (SBS) | Kraton Polymers | 60 | 60 | |
| D1102, Sty 30% (SBS) | Kraton Polymers | | | 50 |
| Arkon M135 | Arakawa Chemical Industries, Ltd. | 25 | 25 | |
| Arkon M115 | Arakawa Chemical Industries, Ltd. | 25 | 25 | |
| Viscoat#300(pentaerythritol triacrylate) | Osaka Organic Chemical Industry LTD. | | | 2 |
| Irganox(R) 1010(Antioxidant) | Ciba Japan | | | 0.25 |
| Rikaester 8LJA(Glycerol ester of gum rosin) | Rika Fine-Tech Inc. | | | 60 |
| 892LS | Nippon Paper Chemicals CO., LTD. | 5 | | |
| Peel force at ambient temp. (N/12mm)/mode | | 24/FB | 27.5/POP | 30/Jerky |
| Peel force at 80 degrees C (N/12mm)/mode | | 9.0/POP | 1.4/POP | 2.3/POP |
| Peel force after aging at 80 degrees C (N/12mm)/mode | | 18/POP | - | - |
| Shear force after aging at 80 degrees C (N/25x25mm)/mode | | 746/FB | - | - |

**Table 10**

| | Reagent | Supplier | Cex. 15 | Ex. 44 | Ex. 45 | Ex. 46 | Ex. 47 | Ex. 48 | Cex. 16 | Ex. 53 |
|---|---|---|---|---|---|---|---|---|---|---|
| 1^{st} monomer | 2EHA | Nippon shokubai co.,ltd. | 81 | | | | | | 71.11 | 41 |
| | BA | Mitsubishi chemical co., ltd | | 81 | 81 | 81 | 81 | 71.11 | | 32 |
| 2nd monomer | DMAA | Kohjin co., ltd. | 16 | 16 | 16 | 16 | 16 | 27.65 | 27.65 | 24 |
| | DMAEA | Kohjin co., ltd. | 2 | 2 | 2 | 2 | 2 | | | 2 |
| | AA | Toagosei co., ltd. | 1 | 1 | 1 | 1 | 1 | 1.23 | 1.23 | 1 |
| Photopolymerization initiator | Irgacure 651 | Ciba Japan | 0.18 | 0.18 | 0.18 | 0.18 | 0.18 | 0.178 | 0.237 | 0.3 |
| Crosslinker | HDDA | Kyoeisha chemical co., ltd. | 0.06 | 0.06 | 0.06 | 0.06 | 0.06 | 0.059 | 0.059 | 0.06 |
| Block copolymer | D1118K (SBS) | Kraton Japan | 40 | 40 | | | | | | |
| | D1119 (SIS) | Kraton Japan | | | 40 | | | | | 20 |
| | D1124 (SIS) | Kraton Japan | | | | 40 | | | | |
| | Q3460 (SIS) | Zeon Corporation | | | | | 40 | 39.51 | 39.51 | |
| | G1726 (SEBS) | Kraton Japan | | | | | 40 | 39.51 | 39.51 | 20 |
| Tackifier | Arkon M135 | Arakawa chemical industries ltd. | 20 | 20 | | | | | | |
| | Arkon M115 | Arakawa chemical industries ltd. | 20 | 20 | | | | | | |
| | Arkon P125 | Arakawa chemical industries ltd. | | | 40 | 40 | 40 | 39.51 | 39.51 | |
| Additives | 892LS | Nippon paper chemicals | 5 | 5 | | | | 4.94 | 4.94 | 40 |
| Peel force on PP at ambient temp. (N/12mm) | | force | 17 | 24 | 24 | 25 | 25 | 28 | 26.3 | 25 |
| | | mode | POP | FB | FB | FB | FB | FB | POP | FB |
| Peel force on PP at 80 degrees C (N/12mm) | | force | 0.8 | 10.5 | 6.4 | 11.5 | 8.3 | 10.5 | 0.7 | 6.5 |
| | | mode | POP | POP | POP | POP | POP | POP | POP | POP |

**Table 11**

| | Reagent | Supplier | Ex. 49 | Ex. 50 | Ex. 51 | Ex. 52 |
|---|---|---|---|---|---|---|
| 1st monomer | 2EHA | Nippon shokubai co.,ltd. | 31 | 31 | 31 | 70.12 |
| | BA | Mitsubishi chemical co., ltd | 50 | 46 | 42 | |
| 2nd monomer | DMAA | Kohjin co., ltd. | 16 | 20 | 24 | 26.67 |
| | DMAEA | Kohjin co., ltd. | 2 | 2 | 2 | 1.98 |
| | AA | Toagosei co., ltd. | 1 | 1 | 1 | 1.23 |
| Photopolymerization initiator | Irgacure 651 | Ciba Japan | 0.18 | 0.18 | 0.18 | 0.178 |
| Crosslinker | HDDA | Kyoeisha chemical co., ltd. | 0.06 | 0.06 | 0.06 | 0.059 |
| Block copolymer | D1118K (SBS) | Kraton Japan | 40 | 40 | 40 | 39.51 |
| Tackifier | Arkon M135 | Arakawa chemical industries ltd. | 15 | 20 | 20 | 19.75 |
| | Arkon M115 | Arakawa chemical industries ltd. | 25 | 20 | 20 | 19.75 |
| Additives | 892LS | Nippon paper chemicals | 5 | 5 | 5 | 4.94 |
| Peel force on PP at ambient temp. (N/12mm) | | force | 26 | 25 | 25 | 28 |
| | | mode | FB | FB | FB | FB |
| Peel force on PP at 80 degrees C (N/12mm) | | force | 11 | 12 | 13.5 | 10.5 |
| | | mode | POP | POP | POP | POP |

**Table 12**

| | Reagent | Supplier | Ex. 54 | Ex. 55 |
|---|---|---|---|---|
| 1 st monomer | 2EHA | Nippon shokubai co.,ltd. | 81 | 81 |
| 2nd monomer | Viscoat #190 | Osaka organic chemical industry ltd. | 15 | |
| | Viscoat #158 | Osaka organic chemical industry ltd. | | 15 |
| | DMAA | Kohjin co., ltd. | 16 | 16 |
| | DMAEA | Kohjin co., ltd. | 2 | 2 |
| | AA | Toagosei co., ltd. | 1 | 1 |
| Photopolymerization initiator | Irgacure 651 | Ciba Japan | 0.18 | 0.18 |
| Crosslinker | HDDA | Kyoeisha chemical co., ltd. | 0.06 | 0.06 |
| Block copolymer | D1118K (SBS) | Kraton Japan | 40 | 40 |
| Tackifier | Arkon M135 | Arakawa chemical industries ltd. | 20 | 20 |
| | Arkon M115 | Arakawa chemical industries ltd. | 20 | 20 |
| Additives | Superchlon 892LS | Nippon paper chemicals | 5 | 5 |
| Peel force on PP at ambient temp. (N/12mm) | | force | 32 | 27 |
| | | mode | FB | POP |
| Peel force on PP at 80 degrees C (N/12mm) | | force | 13.0 | 13.0 |
| | | mode | POP | POP |

**Table 13**

| | | Adherend | | | | | |
|---|---|---|---|---|---|---|---|
| | | Birch | PMMA | ABS | PC | PP | SUS |
| Ex. 49 DMA 16% | N=1 | 2 days | 1 day | 5 days | 5 days | > 7 days | > 7 days |
| | N=2 | 4 days | 1 day | 6 days | > 7 days | > 7 days | > 7 days |
| Ex. 50 DMA 20% | N=1 | > 7 days | 2 days | > 7 days | 5 days | > 7 days | > 7 days |
| | N=2 | > 7 days | 3 days | > 7 days | > 7 days | > 7 days | > 7 days |
| Ex. 51 DMA 24% | N=1 | > 7 days | > 7 days | > 7 days | > 7 days | > 7 days | > 7 days |
| | N=2 | > 7 days | > 7 days | > 7 days | > 7 days | > 7 days | > 7 days |
| Ex. 52 DMA 27% | N=1 | > 7 days | > 7 days | > 7 days | > 7 days | > 7 days | > 7 days |
| | N=2 | > 7 days | > 7 days | > 7 days | > 7 days | > 7 days | > 7 days |

## Claims

1. A pressure sensitive adhesive obtained by polymerizing a mixture containing:
1) 100 mass parts of (meth)acrylic monomer comprising
98-50 mass parts of a first monomer selected from an aliphatic (meth)alkyl acrylate having a carbon number of 4-6 and an aliphatic (meth)alkyl acrylate having a carbon number of 7-12, wherein the glass transition temperature of a homo-polymer thereof is -25 degrees C or less; and
2-50 mass parts of a second monomer comprising one or more selected from the group consisting of:
an amide group-containing ethylenic unsaturated copolymerizing monomer,
a carboxylic group-containing ethylenic unsaturated copolymerizing monomer,
an amino group-containing ethylenic unsaturated copolymerizing monomer,
a non-tertial alkyl(meth)acrylate wherein the glass transition temperature of a homo-polymer thereof is -25 degrees C or more, and
a monomer represented by the chemical structural formula (I) CH₂=CR¹COO(R₂O)nR³ or CH₂=CR¹COOR⁴R⁵ (R¹=methyl or H; R² and R⁴ = linear or branched alkyl having a carbon number of 1-6; R³ =methyl, ethyl, or substituted or non-substituted phenyl; R⁵=substituted or non-substituted 4-membered or 5-membered ring containing oxygen; n=1-16);
2) 10-100 mass parts of a block copolymer;
3) 20-100 mass parts of hydrogenated tackifier; and
4) 0.05-1.0 mass parts of a photopolymerization initiator,
which pressure sensitive adhesive is other than an adhesive according to Preparation Example 3 of EP 2 226 191 A1.

2. The pressure sensitive adhesive according to claim 2, comprising 98-60 mass parts of the first monomer and 2-40 mass part of the second monomer.

3. The pressure sensitive adhesive according to claim 2, wherein the first monomer is an aliphatic (meth)alkyl acrylate having a carbon number of 4-6 and the second monomer is one selected from an amide group-containing ethylenic unsaturated copolymerizing monomer, a carboxylic group-containing ethylenic unsaturated copolymerizing monomer and non-tertial alkyl(meth)acrylate wherein the glass transition temperature of a homo-polymer thereof is -25 degrees C or more.

4. The pressure sensitive adhesive according to claim 2, wherein the first monomer is an aliphatic (meth)alkyl acrylate having a carbon number of 7-12 and the second monomer is an amide group-containing ethylenic unsaturated copolymerizing monomer.

5. The pressure sensitive adhesive according to claim 2, wherein the second monomer is an amide group-containing ethylenic unsaturated copolymerizing monomer and a carboxylic group-containing ethylenic unsaturated copolymerizing monomer, or a carboxylic group-containing ethylenic unsaturated copolymerizing monomer and non-tertial alkyl(meth)acrylate wherein the glass transition temperature of a homo-polymer of the non-tertial alkyl(meth)acrylate is -25 degrees C or more.

6. The pressure sensitive adhesive according to claim 1, wherein the first monomer is n-butyl acrylate.

7. The pressure sensitive adhesive according to claim 1, wherein the first monomer is 2-ethylhexyl acrylate.

8. The pressure sensitive adhesive according to claim 1, wherein the block copolymer is selected from the group consisting of styrene-butadiene-styrene block copolymer, styrene-butadiene block copolymer, styrene-butadiene/butylene-styrene block copolymer, styrene-ethylene/butylene-styrene block copolymer, styrene ethylene/propylene-styrene block copolymer and styrene-ethylene/propylene block copolymer.

9. A pressure sensitive adhesive tape comprising a substrate layer and a pressure sensitive adhesive layer comprising the pressure sensitive adhesive according to claim 1.

10. The pressure sensitive adhesive tape according to claim 9, wherein the substrate layer comprises an acrylic foam sheet.

## Patentansprüche

1. Ein druckempfindlicher Klebstoff, erhalten durch Polymerisieren einer Mischung, die enthält:
1) 100 Masseteile (Meth-)Acrylmonomer, umfassend
98 bis 50 Masseteile ein erstes Monomer, ausgewählt aus einem aliphatischen (Meth-)Alkylacrylat mit einer Kohlenstoffzahl von 4 bis 6 und einem aliphatischen (Meth-)Alkylacrylat mit einer Kohlenstoffzahl von 7 bis 12, wobei die Glasübergangstemperatur eines Homopolymers davon -25 Grad Celsius oder weniger beträgt; und
2 bis 50 Masseteile ein zweites Monomer, umfassend eines oder mehreres, ausgewählt aus der Gruppe bestehend aus:
einer Amidgruppe, die ein ethylenisches ungesättigtes copolymerisierendes Monomer enthält,
einer Carboxylgruppe, die ein ethylenisches ungesättigtes copolymerisierendes Monomer enthält,
einer Aminogruppe, die ein ethylenisches ungesättigtes copolymerisierendes Monomer enthält,
einem nicht tertiären Alkyl(meth)acrylat, wobei die Glasübergangstemperatur eines Homopolymers davon -25 Grad C oder mehr beträgt, und
einem Monomer, dargestellt durch die chemische Strukturformel (I) CH₂=CR¹COO(R₂O)nR³ oder CH₂=CR¹COOR⁴R⁵ (R¹=Methyl oder H; R² und R⁴ = lineares oder verzweigtes Alkyl mit einer Kohlenstoffzahl von 1 bis 6; R³ =Methyl, Ethyl oder substituiertes oder nicht substituiertes Phenyl; R⁵=substituierter oder nicht substituierter 4-gliedriger oder 5-gliedriger Ring, der Sauerstoff enthält; n=1 bis 16);
2) 10 bis 100 Masseteile einen Blockcopolymer;
3) 20 bis 100 Masseteile einen hydrierten Klebrigmacher; und
4) 0,05 bis 1,0 Masseteile einen Photopolymerisationsinitiator,
wobei der druckempfindliche Klebstoff ein anderer ist als ein Klebstoff gemäß Zubereitungsbeispiel 3 von EP 2 226 191 A1.

2. Der druckempfindliche Klebstoff nach Anspruch 2, umfassend 98 bis 60 Masseteile das erste Monomer und 2 bis 40 Masseteile das zweite Monomer.

3. Der druckempfindliche Klebstoff nach Anspruch 2, wobei das erste Monomer ein aliphatisches (Meth-)Alkylacrylat mit einer Kohlenstoffzahl von 4 bis 6 ist und das zweite Monomer ausgewählt ist aus einem amidgruppenhaltigen ethylenischen ungesättigten copolymerisierenden Monomer, einem carboxylgruppenhaltigen ethylenischen ungesättigten copolymerisierenden Monomer und einem nicht tertiären Alkyl(meth)acrylat, wobei die Glasübergangstemperatur eines Homopolymers davon -25 Grad C oder mehr beträgt.

4. Der druckempfindliche Klebstoff nach Anspruch 2, wobei das erste Monomer ein aliphatisches (Meth-)Alkylacrylat mit einer Kohlenstoffzahl von 7 bis 12 ist und das zweite Monomer ein amidgruppenhaltiges ethylenisches ungesättigtes copolymerisierendes Monomer ist.

5. Der druckempfindliche Klebstoff nach Anspruch 2, wobei das zweite Monomer ein amidgruppenhaltiges ethylenisches ungesättigtes copolymerisierendes Monomer und ein carboxylgruppenhaltiges ethylenisches ungesättigtes copolymerisierendes Monomer oder ein carboxylgruppenhaltiges ethylenisches ungesättigtes copolymerisierendes Monomer und ein nicht tertiäres Alkyl(meth)acrylat ist, wobei die Glasübergangstemperatur eines Homopolymers des nicht tertiären Alkyl(meth)acrylats -25 Grad C oder mehr beträgt.

6. Der druckempfindliche Klebstoff nach Anspruch 1, wobei das erste Monomer n-Butylacrylat ist.

7. Der druckempfindliche Klebstoff nach Anspruch 1, wobei das erste Monomer 2-Ethylhexylacrylat ist.

8. Der druckempfindliche Klebstoff nach Anspruch 1, wobei das Blockcopolymer ausgewählt ist aus der Gruppe bestehend aus Styrolbutadienstyrol-Blockcopolymer, Styrolbutadien-Blockcopolymer, Styrolbutadien/Butylenstyrol-Blockcopolymer, Styrolethylen/Butylenstyrol-Blockcopolymer, Styrolethylen/Propylenstyrol-Blockcopolymer und Styrolethylen/Propylen-Blockcopolymer.

9. Ein druckempfindliches Klebeband, umfassend eine Trägerschicht und eine druckempfindliche Klebstoffschicht, die den druckempfindlichen Klebstoff nach Anspruch 1 umfasst.

10. Das druckempfindliche Klebeband nach Anspruch 9, wobei die Trägerschicht eine Acrylschaumlage umfasst.

## Revendications

1. Adhésif sensible à la pression obtenu par polymérisation d'un mélange contenant :
1) 100 parties en masse de monomère (méth)acrylique comprenant
98 à 50 parties en masse d'un premier monomère choisi parmi un (méth)acrylate d'alkyle aliphatique ayant un nombre de carbones de 4 à 6 et un (méth)acrylate d'alkyle aliphatique ayant un nombre de carbones de 7 à 12, dans lequel la température de transition vitreuse d'un homopolymère de celui-ci est de - 25 degrés C ou moins ; et
2 à 50 parties en masse d'un deuxième monomère comprenant un ou plusieurs choisis dans le groupe constitué de :
un monomère de copolymérisation à insaturation éthylénique contenant un groupe amide,
un monomère de copolymérisation à insaturation éthylénique contenant un groupe carboxylique,
un monomère de copolymérisation à insaturation éthylénique contenant un groupe amino,
un (méth)acrylate d'alkyle non tertiaire dans lequel la température de transition vitreuse d'un homopolymère de celui-ci est de -25 degrés C ou plus, et
un monomère représenté par la formule chimique développée (I) CH₂=CR¹COO(R₂O)nR³ ou CH₂=CR¹COOR⁴R⁵ (R¹=méthyle ou H ; R² et R⁴ = alkyle linéaire ou ramifié ayant un nombre de carbones de 1 à 6 ; R³ = méthyle, éthyle, ou phényle substitué ou non substitué ; R⁵= cycle à 4 chaînons ou 5 chaînons substitué ou non substitué contenant de l'oxygène ; n=1 à 16) ;
2) 10 à 100 parties en masse d'un copolymère séquencé ;
3) 20 à 100 parties en masse d'un agent poisseux hydrogéné ; et
4) 0,05 à 1,0 partie en masse d'un initiateur de photopolymérisation,
lequel adhésif sensible à la pression est autre qu'un adhésif selon l'Exemple de préparation 3 du document EP 2 226 191 A1.

2. Adhésif sensible à la pression selon la revendication 2, comprenant 98 à 60 parties en masse du premier monomère et 2 à 40 parties en masse du deuxième monomère.

3. Adhésif sensible à la pression selon la revendication 2, dans lequel le premier monomère est un (méth)acrylate d'alkyle aliphatique ayant un nombre de carbones de 4 à 6 et le deuxième monomère est un monomère choisi parmi un monomère de copolymérisation à insaturation éthylénique contenant un groupe amide, un monomère de copolymérisation à insaturation éthylénique contenant un groupe carboxylique et un (méth)acrylate d'alkyle non tertiaire dans lequel la température de transition vitreuse d'un homopolymère de celui-ci est de - 25 degrés C ou plus.

4. Adhésif sensible à la pression selon la revendication 2, dans lequel le premier monomère est un (méth)acrylate d'alkyle aliphatique ayant un nombre de carbones de 7 à 12 et le deuxième monomère est un monomère de copolymérisation à insaturation éthylénique contenant un groupe amide.

5. Adhésif sensible à la pression selon la revendication 2, dans lequel le deuxième monomère est un monomère de copolymérisation à insaturation éthylénique contenant un groupe amide et un monomère de copolymérisation à insaturation éthylénique contenant un groupe carboxylique, ou un monomère de copolymérisation à insaturation éthylénique contenant un groupe carboxylique et un (méth)acrylate d'alkyle non tertiaire, dans lequel la température de transition vitreuse d'un homopolymère du (méth)acrylate d'alkyle non tertiaire est de - 25 degrés C ou plus.

6. Adhésif sensible à la pression selon la revendication 1, dans lequel le premier monomère est l'acrylate de n-butyle.

7. Adhésif sensible à la pression selon la revendication 1, dans lequel le premier monomère est l'acrylate de 2-éthylhexyle.

8. Adhésif sensible à la pression selon la revendication 1, dans lequel le copolymère séquencé est choisi dans le groupe constitué de copolymère séquencé styrène-butadiène-styrène, copolymère séquencé styrène-butadiène, copolymère séquencé styrène-butadiène/butylène-styrène, copolymère séquencé styrène-éthylène/butylène-styrène, copolymère séquencé styrène éthylène/propylène-styrène et copolymère séquencé styrène-éthylène/propylène.

9. Ruban d'adhésif sensible à la pression comprenant une couche de substrat et une couche d'adhésif sensible à la pression comprenant l'adhésif sensible à la pression selon la revendication 1.

10. Ruban d'adhésif sensible à la pression selon la revendication 9, dans lequel la couche de substrat comprend une feuille de mousse acrylique.
